# EUROPEAN PATENT APPLICATION

(11) **EP 4 631 866 A2**
(43) Date of publication of application: **15.10.2025**
(21) Application number: 25164605.5
(22) Date of filing: 19.03.2025
(51) Int. Cl.: B64F 5/10, G05B 19/406

(54) **AIRCRAFT ENGINE TWIN ELECTRIC SYSTEM AND METHOD**

(30) Priority: 20.03.2024 US 202463567926 P; 21.01.2025 US 202519033471
(71) Applicant: Embraer S.A., 12227-901 São José Dos Campos SP (BR)
(72) Inventor: BARBOSA, Alex Martins, 12227-901 Sao José dos Campos, SP (BR)
(74) Representative: Liesegang, Eva

(57) **Abstract**

An aircraft engine emulator comprises a housing; at least one actuator or emulated actuator disposed within the housing; at least one sensor or emulated sensor disposed within the housing; and a wired connection configured to connect the at least one actuator or emulated actuator and the at least one sensor or emulated sensor for communication with components on board an aircraft, wherein the aircraft engine emulator is configured to take the place of an engine to the components on board an aircraft that has at least one missing or non-functional engine.

## Description

### CROSS-REFERENCE TO RELATED APPLICATION

The benefit of U.S. Provisional Patent Application No. 63/567,926 filed March 20, 2024 is claimed. This application is incorporated by reference in its entirety for all purposes.

### FIELD

The technology herein relates to technology applied during the aircraft assembly process, so final assembly and maintenance areas can be used. The technology further relates to components that simulate or emulate aspects of an aircraft engine for the limited purpose of allowing further manufacturing of the aircraft to proceed before engines have been mounted.

### BACKGROUND

Aircraft assembly and maintenance requires execution of activities within the agreed deadline, quality and cost to guarantee an uninterrupted assembly flow and reduce dependence on high value-added components during the process. However, aircraft assembly lines are complex manufacturing systems where multiple components and subsystems come together to form a complete aircraft. Example assembly steps include:
- Structural Assembly: Structures, wings and fuselage components are assembled.
- System Installation: Electrical, hydraulic and avionics systems are integrated.
- Engine installation: Engines are assembled and connected to the fuselage.
- Final Assembly: All components are assembled and the aircraft is prepared for testing.
- Testing and Quality Control: The aircraft undergoes several tests to ensure airworthiness and quality.

The engines are generally manufactured/assembled by an offsite engine supplier. The manufactured engines are shipped to the aircraft manufacturer, bolted onto the engine fuselage, and their wiring harnesses are connected to various mating electrical connections of the aircraft fuselage onboard wiring harnesses.

Many onboard systems on the aircraft monitor, support and protect the engines. For example, engines typically include a number of sensors used to monitor the state and condition of the engines, a number of actuators used to control and operate the engines, etc. Such sensors and actuators electrically connect to various electronic control and monitoring systems on board the aircraft. Those various electronic control and monitoring systems on board the aircraft cannot function or function properly unless/until the engines are mounted to the aircraft. But sometimes it may be advantageous to proceed with manufacturing while delaying when the engines are mounted.

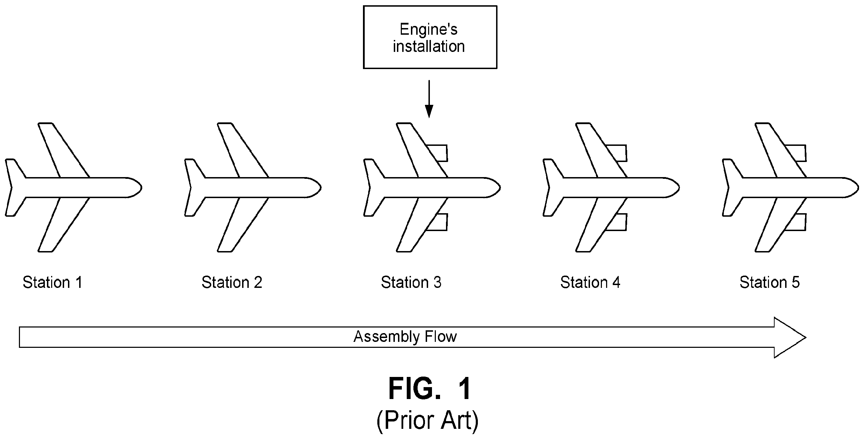

The example Figure 1 assembly line diagram illustrates assembly flow and installation timing/position of the engines, demonstrating the engine's dependence on other stations that require electrical signals for the correct functioning of the Fuel, Bleed, Firex, Electrical, Autothrottle systems and Hydraulics subsystems. The Fuel, Bleed, Firex, Electrical, Autothrottle systems and Hydraulics subsystems cannot operate unless/until the engines are mounted and those subsystems are connected to the engines.

In any process, it is necessary to evolve in terms of new technical process effect. In this way, the current final aircraft assembly process is looking for improvement to reduce operational cost. A relevant factor is that the item with the highest added value in production, in this case, the engines, raises the WIP (Work in Process) of the aircraft manufacturing and maintenance process. Finding the better ways to improve the efficiency of the engine's installation - such as by delaying when the engines are mounted -- will provide a benefit for the manufacturing process.

Of course, since an aircraft cannot fly until its engines are installed and operational, any aircraft manufacturer depends on the engine's installation to complete the final assembly of the aircraft. The engines are tested electrically to guarantee that the functions are performed properly, and the airplane is ready for flight. However, aircraft engine installation is a complex process that requires precision, attention to detail, and strict adherence to safety protocols. Moving/delaying engine installation to the final stations or timings of aircraft assembly can reduce the WIP (Work In Process) of the final assembly, but depending on requirement testing, this is often not possible.

Meanwhile, aircraft manufacturers have been looking for ways to simulate and emulate the dynamic conditions of the engines. However, such solutions often or typically use a computer with an acquisition and stimulation board for electrical signals. For example, one approach provides a universal simulator for aircraft engines comprising an industrial personal computer, data acquisition hardware based on the PXI platform, an instrument extension box, a signal adaptation unit, a direct current voltage stabilized source and a special test cable. The simulation is carried out in real time using software that contains mathematical models of the engines. Disadvantages include
- Requires access to intellectual property information from the engine manufacturer;
- Requires external energy source infrastructure for system operation;
- High implementation effort.

Another example approach provides a system for real time simulation of the environment of an aeroengine which includes a digital computer with its inputs switched by a selection module included in the computer either to a respective sensor or else to a digital surrogate bus configured to transmit digital surrogate data generated by a real-time simulator. Disadvantages of this approach include:
- Requires access to intellectual property information from the engine manufacturer;
- Requires external energy source infrastructure for system operation;
- Requires the engine for complete operation;
- High implementation effort.

Another aero-engine performance simulation method for developing an aeronautical engine simulation comprises the following steps: acquiring the signals for each engine component, sequentially simulating each part of the engine until the simulation result meets the judgment condition, to create a mathematical model of the engine that will be used as an algorithm for the digital engine simulator.

Disadvantages include:
- Requires testing in a real environment with the engine to build mathematical models;
- Requires development of sophisticated software to execute the algorithm and signal stimuli;
- High implementation effort;
- requires use industrial personal computers;
- requires a switch to select between a signal generator and the real physical component;
- requires use of mathematical algorithms to define the model for simulation.

### BRIEF DESCRIPTION OF THE DRAWINGS

Figure 1 shows an example assembly line image Illustrating an example prior art assembly flow and the timing/position in which the engine is mounted without using the simulator.
Figure 2 shows an example Electrical Engine Twin for Aircraft illustrating Electrical Engine Twin integrated into an aircraft.
Figure 2A shows an example flowchart.
Figure 3 shows an example electrical Twin Engine block diagram with system components.
Figures 4A & 4B show an example assembly Box schematic illustrating an assembly diagram of internal components of the box.
Figure 5 shows example ground Support Equipment illustrating assembled equipment featured with GSE.
Figure 6 shows an example interface Harness illustrating wiring and its components.

### DETAILED DESCRIPTION OF NON-LIMITING EMBODIMENTS

The Electrical Engine Twin for Aircraft is a simulator or emulator of electrical signals for an aircraft without dynamic variation of engine variables and with the aim of guaranteeing. ensuring, testing and/or providing correct functioning of the Fuel, Bleed, Firex, Electrical, Autothrottle and Hydraulic systems of an aircraft in assembly conditions.

A proposed system uses the same engine electrical components such as sensors, actuators and control computers used in engine construction, added to primary electrical components (e.g., resistors, inductors, capacitors, switches, relays, thermocouples) that are used to provide electrical signals as sensors and/or actuators mounted inside the engine or which are not available for sale separately. In one example, the system has most of the very same actuators and sensors of the engines, but replaces a subset of the actuators and/or sensors that cannot be obtained easily or at all with substitute electronic circuits and components that emulator such subset of actuators and/or sensors.

As noted above, aircraft engine installation is a complex process that requires precision, attention to detail, and strict adherence to safety protocols. In contrast, installing GSE (Ground Support Equipment) is a simpler process as it does not require mechanical connections e.g., of a massive engine, limiting itself only to electrical and/or signal connections and not connecting any hydraulics, fuel, fluids, air paths, or mechanical coupling..

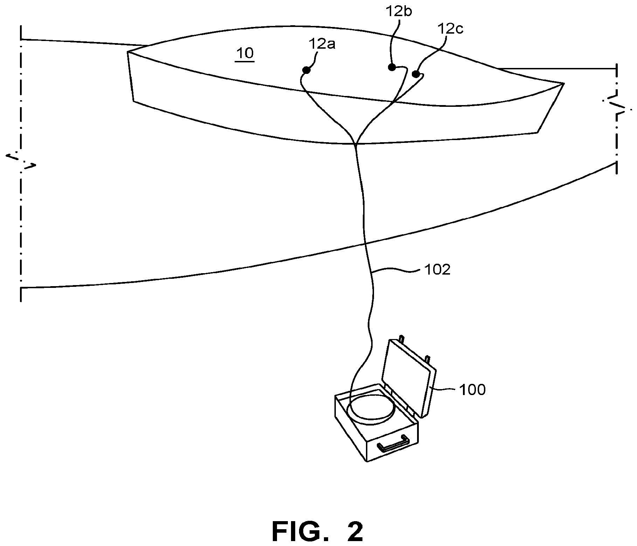

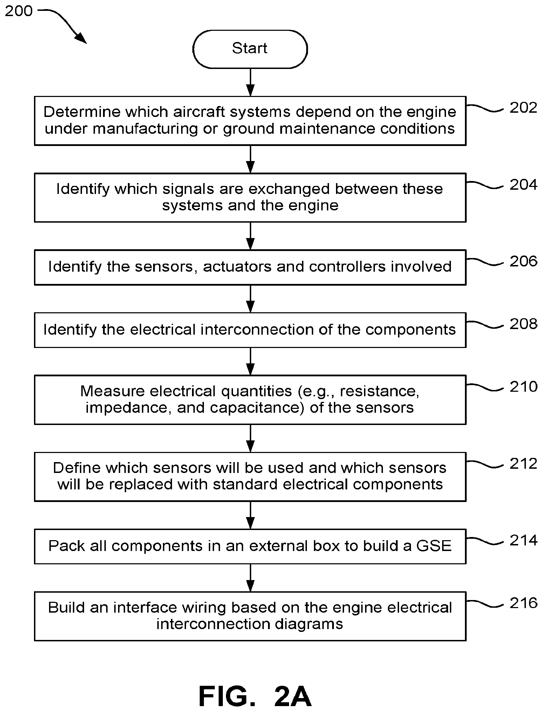

The electrical and/or signal connections are made with a GSE for each pylon P (i.e., a pair of GSEs, a first GSE for a left pylon P and a second GSE for a right pylon P). Figure 2 illustrates an electrical connection made by interface wiring 102 between the pylon 10 and the GSE 100 in a production environment. The GSE 100 connected in this manner to the electrical connections 12 that are part of the pylon P/fuselage F guarantees electrical signals are supplied for the correct operation of systems onboard the aircraft (i.e., those onboard systems are "satisfied" and cannot distinguish the GSE from an actual engine) even though the aircraft is unable to fly because actual engines have not yet been installed/mounted/connected to their respective pylons P.

An embodiment is characterized by a development method and building a system.

### EXAMPLE METHOD

An example method comprises determining which aircraft systems depend on an engine under manufacturing or ground maintenance conditions; identifying which signals are exchanged between these systems and the engine; identifying sensors, actuators and controllers involved; identifying electrical interconnection of components; measuring electrical quantities of the sensors (resistance, impedance, and capacitance); defining which sensors will be used and which sensors will be replaced with non-sensor electrical components; packing all components in an external box to build a GSE; and building an interface wiring based on engine electrical interconnection diagrams.

An embodiment provides a method and system for constructing Aircraft Electric Motor Twins, which will be capable of replacing - for a limited purpose -- the installation of actual engines in a ground-based aircraft manufacturing or maintenance environment.

The method involves identifying which electrical signals will be simulated to ensure the correct functioning of the Fuel, Bleed, Firex, Electrical, Autothrottle and Hydraulic systems, in a factory environment and without dynamic variations in the engine. According to the example development sequence 200 of Fig. 2A:
- Determine which aircraft systems depend on the engine under manufacturing or ground maintenance conditions (202);
- Identify which signals are exchanged between these systems and the engine (204);
- Identify the sensors, actuators and controllers involved (206);
- Identify the electrical interconnection of the components (208);
- Measure the electrical quantities of the sensors (resistance, impedance, and capacitance) (210);
- Define which sensors will be used and which sensors will be replaced with standard electrical components (212);
- Pack all components in an external box to build a GSE (214);
- Build an interface wiring based on the engine electrical interconnection diagrams (216).

Which sensors, actuators and controllers are identified in block 206 will depend on the design of the particular engine. See for example USP12180901; US12180895; US20240425187; US12168936; US 12162613; US12188410; US 12187444; US12140075; Rajagopalan et al, Session: GA-8: Propulsion Controls and Health Monitoring in General Aviation Published Online:11 Mar 2014 doi.org/10.2514/6.2003-2645, AIAA/CAS International Air and Space Symposium and Exposition: The Next 100 Years, 14-17 July 2003 (Dayton Ohio), AIAA 2003-2645; Rajagopalan, Embedded Control and Software Development Technologies for Gas Turbine Engines, SAE Technical Paper 2004-01-3220, 2004, doi.org/10.4271/2004-01-3220. They will also depend on the functionality of the onboard electronics that interfaces with the engines in a production/manufacturing environment. In one embodiment, the GSE 100 "fools" the equipment onboard the aircraft into interconnecting with it instead of an actual aircraft engine. The GSE 100 "spoofs" the engine to the onboard equipment for limited purposes of operating the onboard equipment during at least one further production/manufacturing phase of the aircraft. GSE 100 does not perform most functions of the actual engine. For example, the GSE does not consume fuel, provide thrust, generate heat, generate bleed air, generate exhaust, generate heat, etc. as an actual engine would do. However, in a production environment it would be dangerous to operate a mounted engine in a hangar to perform these functions. Accordingly, the GSE 100 does not need to emulate an actual engine to perform these functions, and intentionally does not have the capabilities to do such things. Instead, the GSE 100 has only a limited repertoire of functionality that emulates a corresponding limited repertoire of functionality an aircraft engine is capable of performing while the aircraft is still being manufactured on the assembly line. The GSE 100 need to emulate any function of the aircraft engine that the aircraft engine could not perform while the aircraft is still on the assembly line being manufactured within a hangar.

### EXAMPLE SYSTEM

An example aircraft engine emulator comprises:
a housing;
at least one actuator or emulated actuator disposed within the housing;
at least one sensor or emulated sensor disposed within the housing; and
a wired connection configured to connect the at least one actuator or emulated actuator and the at least one sensor or emulated sensor for communication with components on board an aircraft,
wherein the aircraft engine emulator is configured to present to functionality of components on board an aircraft having at least one missing or non-functional engine, a substitution for non-operating engine states.

A processor and/or control circuit within the housing emulates interface aspects but not engine control aspects of a processor and/or processing circuit within the engine.

The housing has a form factor of a suitcase and includes plural compartments.

The plural compartments comprise a first compartment that is inaccessible to a user and a second compartment that is accessible to the user.

The wired connection comprises a multi-conductor wiring harness.

The emulated actuator and/or sensor comprises electronic components selected from a group consisting of resistors, capacitors, coils, switches, relays and thermocouples.

The at least one actuator or emulated actuator comprises an actuator that is within the engine.

The at least one sensor or emulated sensor comprises a sensor that is within the engine.

The aircraft engine emulator does not require engine installation during manufacturing, does not require tests to identify parameters, does not require an external energy source for operation, and is compatible with construction of the engine.

The wired interconnection is the same as certified diagrams of the engine and the components packed in an external box are the same as the engine.

An example aircraft engine emulation method comprises: emulating an actuator interface of an aircraft engine with at least a first component disposed within a non-engine portable housing; emulating a sensor interface of the aircraft engine with a second component disposed within the non-engine portable housing; and connecting the first component and the second component for communication with an aircraft that has at least one missing or non-functional engine, so as to take the place of the at least one missing or non-functional engine for purposes of interfacing with other components on board the aircraft but not for propelling the aircraft.

A processor and/or control circuit within the housing emulates interface aspects but not engine control aspects of a processor and/or processing circuit within the engine.

The aircraft engine emulation method does not require engine installation during manufacturing, does not perform tests to identify parameters, does not require an external energy source for operation, and is compatible with construction of the engine.

Connecting is the same as certified diagrams of the engine.

The system Electrical Engine Twin for Aircraft includes equipment 100 and interface harness 102 for each simulated engine.

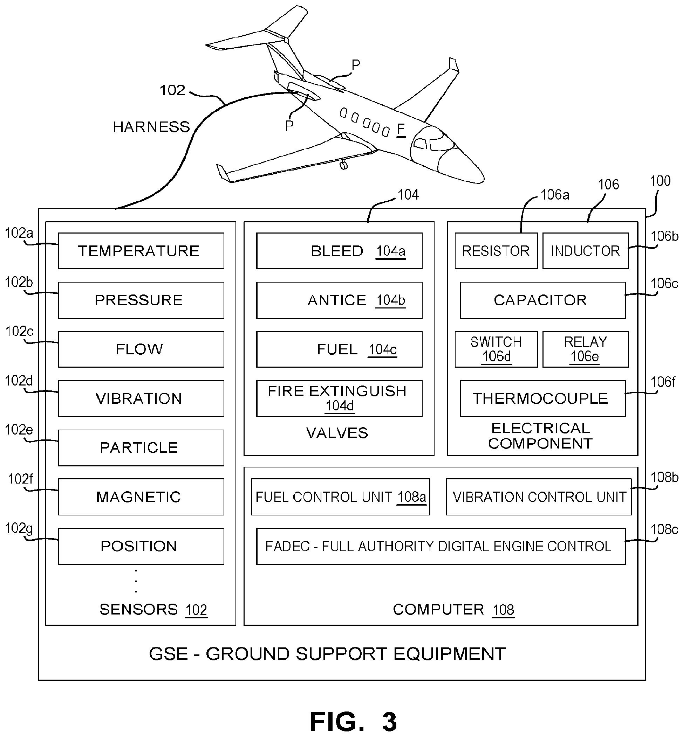

The equipment design details shown in the Figure 3 block diagram contains electrical components that ensure reliable operation of the aircraft in a manufacturing environment. Here are some example electrical components:
Sensors 102 - include temperature sensor(s) 102a, pressure sensor(s) 102b, flow rate sensor(s) 102c, vibration sensor(s) 102d, oil particle sensor(s) 102e, magnetic sensor(s) 102f, position sensor(s) 102g, fire detection sensor(s), current sensor(s) and other sensor(s). These components are electrically connected to provide electrical signals for measuring physical quantities with the characteristics of a static, fault-free engine. As noted above, the components may or may not be actual sensors. For example, in some cases the components are the very same sensors that are found in the aircraft engine. In other cases, the components are not actual sensors but are instead non-sensing circuits and/or components other than actual sensors that provide signal outputs and/or other characteristics that mimic the signal outputs/characteristics of actual sensors. As an example, a capacitive sensor may be emulated by a fixed or variable capacitor, a resistive sensor may be emulated by a fixed or variable resistor, an inductive sensor may be emulated by a fixed or variable inductor, a resistive-capacitive sensor may be emulated by a resistor-capacitor RC network, a resistive-inductive sensor may be emulated by a resistor-inductor RL network, and so on. Meanwhile, since the engine would never be started while the aircraft is in the hangar, the emulated sensors can provide fixed outputs representative of standby-nonoperating states of the actual engine (for example, a high temperature sensor would measure room temperature, a pressure sensor would measure ambient pressure, etc.)

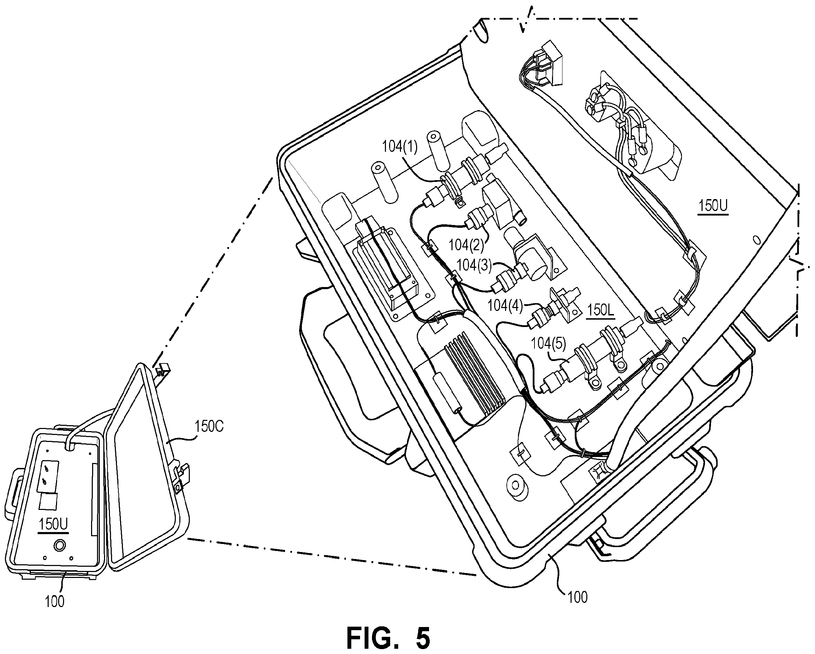

Actuators 104 - include bleed valve 104a, anti-ice valve 104b, fuel valve 104c, and ignition. These components are included so that the aircraft systems do not interpret failures and inhibit functions that will be used in the production environment. As above, the GSE 100 may or may not include or comprise actual actuators. For example, in some embodiments such as shown in Fig. 5, GSE 100 may include actual actuators 104 that are identical to corresponding actuators with an actual engine, but which in the GSE control or actuate nothing other than the actuators themselves. Such arrangement provides actuator characteristics that are identical to the actual actuators within an actual engine. In some embodiments, the GSE 100 includes circuits or components that emulate one or more actual actuators (e.g., that cannot be easily obtained outside of the engine assembly). For example, a fuel valve 104c could be emulated by an RLC network and a relay appropriately configured so that the RLC network and relay has the same voltage/current ratings and operating latency as the actual fuel valve, but costs much less than an actual fuel valve. In some embodiments, an actual "floor swept" fuel valve that is unsuitable for use as a fuel valve (for example it is leaky) could be used as the fuel valve actuator in the GSE 100 since it will behave electrically/operationally in a manner that is identical to the actual fuel valve within an actual engine, the fuel leak having no impact since in the GSE the valve will never be required to pass or regulate actual fuel.

Electrical components 106- include resistors 106a, inductors 106b, capacitors 106c, switches 106d, relays 106e, thermocouples 106g. As noted above, these components are used to provide electrical signals and characteristics like actual sensors and/or actuators that are mounted inside the engine and are not available separately for sale.

Computer 108 - include Fuel Control Unit (FCU) 108a, Vibration Control Unit (VCU) 108b and Full Authority Digital Engine Control (FADEC) 108c. These components provide discrete, analog signals and data bus transmission and reception, which allow aircraft systems to function fault-free. For example, one embodiment of GSE 100 provides one or a plurality of processors and/or other digital circuits that emulate interface aspects of electronic processors and/or digital circuits that integrated into the aircraft engine during states of the aircraft engine that exist within a hangar in the production environment. Such emulating processors and/or digital circuits do not need to emulate full functionality of the actual engine's actual processors and/or digital circuits or perform all control algorithms of same or provide actual operating signals the aircraft engine would provide during starting and operation of the engines because the engine would never be operated in the hangar. Instead, the emulating processors and/or digital circuits in one embodiment emulate only external interface and communications aspects of the actual engine's actual processors and/or digital circuits during limited non-dynamic states of the engines, for example:
receive messages sent from the aircraft onboard control system(s), and acknowledge such received messages if/as called for the by the communications protocols;
respond to received message in the manner in which the actual engine control systems would respond when the engine is in a non-operating state as commanded by the aircraft onboard control system(s);
generate and provide informational messages to aircraft onboard control system(s) of the type the aircraft onboard control system(s) are expecting during non-operating engine states without dynamic variation of engine variables.

Herein, the term "non-operating engine states" means the engine has not started/ignited, is not burning or consuming fuel, is not generating thrust, and is not supporting combustion and is not generating exhaust gases (e.g, for a gas turbine engine). "Non-operating engine states" *can* encompass states where (a) electrical power is applied to the engine to activate certain internal components, (b) the engine operating or exercising internal actuators in response to control signals being applied to the engine, (c) the engine providing information such as sensor readings in response to messages being sent to the engine's integrated electronic control systems; and (d) other active engine functionality the engine can provide while the aircraft is in an assembly hangar. In other words, as used herein, "non-operating" does not mean no operation whatsoever, but it does exclude certain types of engine operation that would not or could not occur outside the assembly line hangar environment, such as dynamic variation of engine variables that occurs only once the engine has been started/ignited (e.g., if a gas turbine engine) to combust fuel in order to produce thrust.

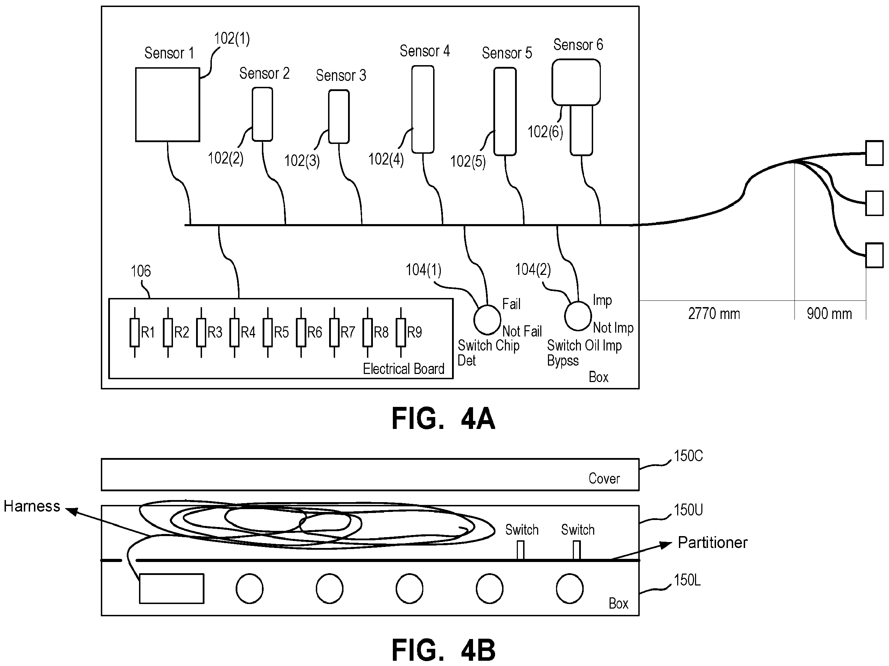

The Figures 4A, 4B schematically illustrate an example assembly of components inside the GSE "box" 100 and presents two views: top plan view (Fig. 4A) and bottom profile view (Fig. 4B).

Fig. 4A Plan View (and see Fig. 5): illustrates the example accommodation of sensors (or circuits/components emulating sensors) 102, actuators (or circuits/components emulating actuators) 104 , electrical components 106 such as resistors, thermocouples, switches, as well as the electrical intelligence between the components. It also presents an example design of the interface harness 102 which connects 102/104/106 to wiring on the aircraft fuselage.

Fig. 4B Profile View (and see Fig. 5): illustrates the lower division 150L of a partitioner where the components are available and without user access, and the upper division 150U containing the switches and wiring accommodation that is available for user operation and manipulation; and a cover 150C.

The equipment was characterized as Ground Support Equipment GSE) as shown in Figures 4A/ 4B and 5 to facilitate use in aircraft operations and provides the following advantageous features and characteristics:
Mobility: capacity and use of the equipment by a single operator, providing simplicity of assembly and disassembly as well as easy storage.
Robust: meets the health conditions of the production environment such as dust, humidity, falls, among others.
Maintainability: facilitate the correction of problems and replacement of components.

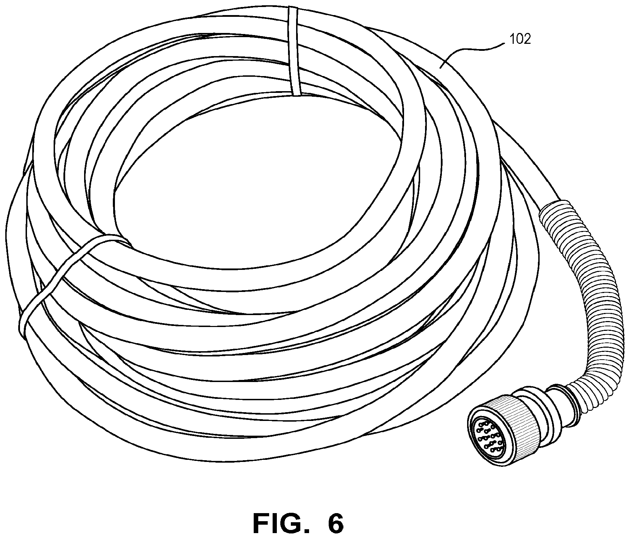

The interface harness 102 according to Figure 6 is made up of wires, connectors, clamps and protective sleeving and labels that have the function of establishing communication between the equipment and the aircraft, such as:
- Wires: Insulated conductors that carry electrical signals and/or power.
- Connectors: Devices that join wires and cables to other components, such as electrical panels, sensors, and actuators.
- Clamps: Secure wires and cables to the airframe or other components.
- Protective Sleeving: Shields wires and cables from environmental factors, such as heat, moisture, and abrasion.
- Labels: Identify wires, cables, and connectors for easy maintenance and troubleshooting.

### EXAMPLE BENEFITS

### Does not require engine installation during manufacturing, meeting PIPO and reducing WIP (Work in Progress)

Does not require tests to identify parameters.

Easy to use in the field, as it does not require an external energy source for operation.

The system is identical to the engine construction.

Robust system with low failure rate, as the components are aeronautical and have a low failure rate.

Simple design and easy manufacturing, as the electrical interconnection is the same as the certified diagrams and the components packed in an external box are the same as the engine.

All patents and publications cited herein are incorporated by reference as if expressly set forth.

While the invention has been described in connection with what is presently considered to be the most practical and preferred embodiments, it is to be understood that the invention is not to be limited to the disclosed embodiments, but on the contrary, is intended to cover various modifications and equivalent arrangements included within the spirit and scope of the appended claims.

## Claims

1. An aircraft engine emulator comprising:
a housing;
at least one actuator or emulated actuator disposed within the housing;
at least one sensor or emulated sensor disposed within the housing; and
a wired connection configured to connect the at least one actuator or emulated actuator and the at least one sensor or emulated sensor for communication with components on board an aircraft,
wherein the aircraft engine emulator is configured to present to functionality of components on board an aircraft having at least one missing or non-functional engine, a substitution for non-operating engine states.

2. The aircraft engine emulator of claim 1 further including a processor and/or control circuit within the housing that emulates interface aspects but not engine control aspects of a processor and/or processing circuit within the engine.

3. The aircraft engine emulator of claim 1 or 2 wherein the housing has a form factor of a suitcase and includes plural compartments.

4. The aircraft engine emulator of claim 3 wherein the plural compartments comprise a first compartment that is inaccessible to a user and a second compartment that is accessible to the user.

5. The aircraft engine emulator of one of the preceding claims wherein the wired connection comprises a multi-conductor wiring harness.

6. The aircraft engine emulator of one of the preceding claims wherein the emulated actuator and/or sensor comprises electronic components selected from a group consisting of resistors, capacitors, coils, switches, relays and thermocouples.

7. The aircraft engine emulator of one of the preceding claims wherein the at least one actuator or emulated actuator comprises an actuator that is within the engine.

8. The aircraft engine emulator of one of the preceding claims wherein the at least one sensor or emulated sensor comprises a sensor that is within the engine.

9. The aircraft engine emulator of one of the preceding claims wherein the aircraft engine emulator does not require engine installation during manufacturing, does not require tests to identify parameters, does not require an external energy source for operation, and is compatible with construction of the engine.

10. The aircraft engine emulator of one of the preceding claims wherein the wired interconnection is the same as certified diagrams of the engine and the components packed in an external box are the same as the engine.

11. An aircraft engine emulation method comprising:
emulating an actuator interface of an aircraft engine with at least a first component disposed within a non-engine portable housing;
emulating a sensor interface of the aircraft engine with a second component disposed within the non-engine portable housing; and
connecting the first component and the second component for communication with an aircraft that has at least one missing or non-functional engine, so as to take the place of the at least one missing or non-functional engine for purposes of interfacing with other components on board the aircraft but not for propelling the aircraft.

12. The aircraft engine emulation method of claim 11 further including using a processor and/or control circuit within the housing to emulate interface aspects but not engine control aspects of a processor and/or processing circuit within the engine.

13. The aircraft engine emulation method of claim 11 or 12 wherein the aircraft engine emulation method does not require engine installation during manufacturing, does not perform tests to identify parameters, does not require an external energy source for operation, and is compatible with construction of the engine.

14. The aircraft engine emulation method of one of claims 11 to 13 further including connecting the same as certified diagrams of the engine.

15. A method, in particular the method of one of claims 11 to 14 comprising:
determining which aircraft systems depend on an engine under manufacturing or ground maintenance conditions;
identifying which signals are exchanged between these systems and the engine;
identifying sensors, actuators and controllers involved;
identifying electrical interconnection of components;
measuring electrical quantities of the sensors (resistance, impedance, and capacitance);
defining which sensors will be used and which sensors will be replaced with non-sensor electrical components;
packing all components in an external box to build a GSE; and
building an interface wiring based on engine electrical interconnection diagrams.
